Europäisches Patentamt

European Patent Office

Office européen des brevets

(19)

(11) Veröffentlichungsnummer: **0 285 759 B1**

(12) **EUROPÄISCHE PATENTSCHRIFT**

(45) Veröffentlichungstag der Patentschrift: **24.04.91**

(51) Int. Cl.⁵: **B65D 21/02**

(21) Anmeldenummer: **88101587.9**

(22) Anmeldetag: **04.02.88**

(54) **Palette zum Speichern und zum Transport von Warenstücken.**

(30) Priorität: **09.02.87 DE 3703911**

(43) Veröffentlichungstag der Anmeldung:
**12.10.88 Patentblatt 88/41**

(45) Bekanntmachung des Hinweises auf die
Patenterteilung:
**24.04.91 Patentblatt 91/17**

(84) Benannte Vertragsstaaten:
**AT BE CH DE ES FR GB GR IT LI LU NL SE**

(56) Entgegenhaltungen:
**DE-A- 2 358 213**
**FR-A- 1 505 619**
**US-A- 3 481 502**
**US-A- 3 570 697**

(73) Patentinhaber: **Otto Hänsel GmbH**
**Lister Damm 19**
**W-3000 Hannover(DE)**

(72) Erfinder: **Hogenkamp, Wilhelm**
**Liebigstrasse 4**
**W-3000 Hannover(DE)**

(74) Vertreter: **Patentanwälte Dipl.-Ing. Rudolf Bibrach Dipl.-Ing. Elmar Rehberg**
**Postfach 1453 Pütterweg 6**
**W-3400 Göttingen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf eine Palette zum Speichern und zum Transport von Warenstücken mit den im Oberbegriff des Anspruchs 1 niedergelegten Merkmalen.

In der Süßwarenindustrie ist es üblich, insbesondere kleinere Süßwarenstücke nach der Herstellung auf Paletten abzulegen und zusammen mit diesen weiterzutransportieren. Dies gilt insbesondere für Schokoladeriegel, welche nach dem Ausformen auf der Aufnahmefläche einer Palette abgelegt werden und auf dieser Palette zu einer nachfolgenden Verpackungsmaschine befördert werden. Werden unterschiedliche Riegelsorten zu einer gemischten Sammelpackung zusammengefaßt, ist es erforderlich, die mit den Schokoladeriegeln belegten Paletten zwischenzuspeichern, so daß der Verpackungsmaschine die gerade erforderlichen Riegelsorten aus einem Vorratslager zugeführt werden können.

Die mit den Süßwarenstücken belegten Paletten werden dazu üblicherweise in Rollcontainer eingeführt, welche ein fahrbares Gestell mit einander zugeordneten Nuten aufweisen, in welche sich die Paletten übereinander von der Seite her einschieben lassen. Das Beschicken der Rollcontainer erfolgt dabei automatisch. Die Rollcontainer werden dazu nach dem Einführen jeder Palette schrittweise angehoben bzw. abgesenkt, so daß die nächste Palette eingeführt bzw. entnommen werden kann. Zu berücksichtigen ist dabei, daß sich die Paletten bei längerem Gebrauch - auch in unterschiedlicher Weise -durchbiegen, so daß ein erheblicher Abstand von Palette zu zu Palette vorgesehen sein muß, damit es nicht zu Störungen kommt. Die Speicherdichte liegt: daher nicht sehr hoch und außerdem wird durch das erforderliche Gestell zusätzlicher Platz beansprucht. Der erforderliche Platzbedarf für die Rollcontainer bei der Zwischenlagerung ist erheblich.

Abgesehen davon werden die Rollcontainer von Hand in das Zwischenlager gebracht und aus diesem herausgeholt. Der dazu erforderliche Aufwand ist sehr groß, insbesondere, wenn leistungsstarke Verpackungsmaschinen bedient werden sollen.

Die DE-A-23 58 213 zeigt eine Palette zum Speichern und zum Transport von Warenstücken mit den im Oberbegriff des Anspruchs 1 angegebenen Merkmalen. An der Unterseite der Bodenplatte sind im Randbereich zwei parallel zueinander verlaufende Leisten ausgebildet. Auf der Oberseite sind in der Bodenplatte entsprechende Vertiefungen vorgesehen. Damit können mehrere derartige Paletten verdreh- und verschiebegesichert aufeinandergestapelt und die so gebildete Einheit zusammen gehandhabt werden. Bedingt durch die Konizität der Leisten und Vertiefungen wird zwischen den einzelnen Bodenplatten eines Stapels je ein Raum zur Aufnahme von Warenstücken geschaffen. Dieser Raum wird zwar durch die Leisten und Vertiefungen in einer Richtung geschlossen, ist aber in der anderen, sich senkrecht dazu erstreckenden Richtung offen. Solche Paletten sind an sich nicht zum Speichern und zum Transport von Süßwarenstücken bestimmt, sondern werden allgemein für Warenstücke eingesetzt. Die besondere Ausbildung läßt es zu, daß die Warenstücke seitlich aus dem Stapel der Paletten herausfallen können, und daß beispielsweise Staubteilchen andererseits aus der Atmosphäre an die Warenstücke gelangen können, was in vielen Fällen ohne Belang ist. Auf dem Gebiet der Süßwarenstücke kommt jedoch dem Schutz und dem Abschluß der Süßwarenstücke beispielsweise gegenüber Staubteilchen aus der Atmosphäre erkennbar große Bedeutung zu.

Der Erfindung liegt die Aufgabe zugrunde, eine Palette der eingangs beschriebenen Art so auszubilden, daß mit ihr Süßwarenstücke während der Produktion in einfacher Weise gehandhabt werden können, wobei sie z. B. ohne Schwierigkeiten von der Aufnahmefläche der Bodenfläche seitlich abgeschoben oder auch auf die Bodenplatte aufgeschoben werden müssen, was insbesondere manuell geschehen soll. Andererseits aber müssen solche Süßwarenstücke auch oft gelagert oder zumindest zwischengespeichert werden. Hierbei bietet es sich an, die Paletten übereinanderzustapeln, wobei es darauf ankommt, einen Schutz der Süßwarenstücke gegen den Zutritt von Staubteilchen aus der Atmosphäre zu erzielen. Natürlich muß im Stapel auch die verdreh- und Verschiebegesicherte Lagerung der einzelnen Paletten gegeneinander gewährleistet sein.

Erfindungsgemäß wird dies dadurch erreicht, daß auch auf der Oberseite der Bodenplatte im Randbereich zwei parallel zueinander verlaufende Leisten vorgesehen sind, die jedoch rechtwinklig zu den Leisten auf der Unterseite der Bodenplatte angeordnet sind, daß die der verdreh- und verschiebegesicherten Stapelbarkeit dienenden Vertiefungen an den Leisten vorgesehen sind, und daß die Leisten gleiche Höhe aufweisen und so in gestapeltem Zustand mit der Bodenplatte einen allseitig geschlossenen Aufnahmeraum für Süßwarenstücke bilden.

Durch die besondere Ausbildung mit den beiden Leisten-Paaren auf der Ober- und auf der Unterseite der Bodenplatte jeder Palette wird nicht nur die verdreh- und verschiebegesicherte Stapelbarkeit erreicht, sondern folgende zusätzliche Funktionen. Durch die gleich hoch ausgebildeten Leisten auf der Unter- und der Oberseite, die einander ergänzen, wird in gestapeltem Zustand jeweils ein allseits geschlossener Aufnahmeraum für die Süßwarenstücke gebildet. Diese sind also gleichsam lagenweise je in einem Behälter eingeschlossen. Andererseits aber lassen sich die Süßwarenstücke auf die Aufnahmefläche der Bodenplatte in Richtung parallel zu den Leisten, die auf der Oberseite der Bodenplatte angeordnet sind, ohne Überschreiten einer Stufe o. dgl. aufschieben oder abschieben, so daß besonders einfach ein Be- und Entladevorgang von solchen Paletten durchführbar ist. Durch die Anordnung der die verdreh- und verschiebegesicherte Stapelbarkeit ermöglichende Vertiefungen an den Leisten wird ein geschickter Unterbringungsort für diese Elemente gewählt, wobei es keiner zusätzlicher Bauteile außer den ohnehin erforderlichen Leisten bedarf. Die in einem Stapel übereinander angeordneten Paletten bilden eine ohne Verwendung zusätzlicher Mittel handhabbare Einheit. Es entfallen Gestellkonstruktionen in den Rollcontainern. Es kann auch auf die Rollcontainer selbst verzichtet werden, weil die Aufnahmeräume der Paletten im Stapel ohnehin geschlossen sind. Der Abstand der Paletten voneinander und damit die Höhe der Leisten braucht nur geringfügig größer zu sein als die Höhe der auf den Paletten aufliegenden Süßwarenstücke, so daß sich insgesamt für einen Stapel solcher Paletten ein kleinerer Raumbedarf ergibt. Schließlich erfährt die Bodenplatte durch die Anordnung der Leisten in den beiden beschriebenen Richtungen eine erhebliche Steigerung ihrer Stabilität, so daß Durchbiegungen der Bodenplatte infolge Beladung mit Süßwarenstücken praktisch in Fortfall kommen.

Wenn die Leisten an Kanten der Bodenplatte vorgesehen sind, ergibt sich nicht nur ein optimal großer Aufnahmeraum für die Süßwarenstücke, sondern auch gleichzeitig eine geschlossene Wandbildung in senkrechter Richtung im Stapel.

Die Bodenplatte kann auf ihrer Oberseite im Anschluß an die Leisten rasten und die darunter angeordneten Leisten an ihrer Unterseite entsprechende Ausnehmungen aufweisen. Auch in dieser Art und Weise sind die beiden Arten von Leisten einander zugeordnet und ergänzen einander auch hinsichtlich der beschriebenen Vertiefungen, die der verdreh- und verschiebegesicherten Stapelbarkeit dienen.

Es ist weiterhin möglich, die Leisten an der Unterseite der Bodenplatte gleichzeitig auch als Gleitkufen auszubilden, was für die mechanische Handhabung der Paletten von Bedeutung ist.

Die Leisten mindestens auf einer Seite der Bodenplatte können auch gegenüber den Kanten zurückversetzt und dadurch im Stapel seitliche Hinterschneidungen zum Eingreifen gebildet sein. In der Regel wird dieser Versatz nur an einer Kante, bevorzugt an der schmaleren Kante der Bodenplatte durchgeführt, damit möglichst wenig Aufnahmeraum hierdurch vernichtet wird und trotzdem die Möglichkeit besteht, die einzelnen Paletten zu handhaben, beispielsweise zu einem Stapel auf- oder abzubauen.

Auf der Oberseite der Bodenplatte kann eine Trennrippe angeordnet sein. Diese Trennrippe erstreckt sich parallel zu den Leisten, die auf der Oberseite angeordnet sind, so daß sich die Bodenplatten der Paletten auch in diesem Bereich nochmals aneinander abstützen. Das maschinelle Auf- und Abschieben der Süßwarenstücke auf die Aufnahmefläche der Bodenplatte wird hierdurch nicht behindert. Die Leisten auf der Oberseite der Bodenplatte einschließlich der Trennrippe erfüllen auch Führungsfunktion für die Handhabung der Süßwarenstücke relativ zur Aufnahmefläche der Bodenplatte. Die parallele Anordnung der Leisten auf der Ober- und der Unterseite erleichtert die Reinigung der Palette. Unzugängliche Ecken und Vertiefungen sind nicht vorhanden.

Die Erfindung wird anhand bevorzugter Ausführungsbeispiele weiter erläutert und beschrieben. Es zeigen:

Figur 1     eine perspektivische Darstellung der Palette in einer ersten Ausführungsform,

Figur 2     eine perspektivische Teilansicht eines Stapels aus Paletten gemäß Figur 1,

Figur 3     eine perspektivische Teilansicht an der Verbindungsstelle zweier Paletten anderer Ausführung im Stapel und

Figur 4     eine perspektivische Teilansicht eines Stapels von Paletten in einer dritten Ausführungsform.

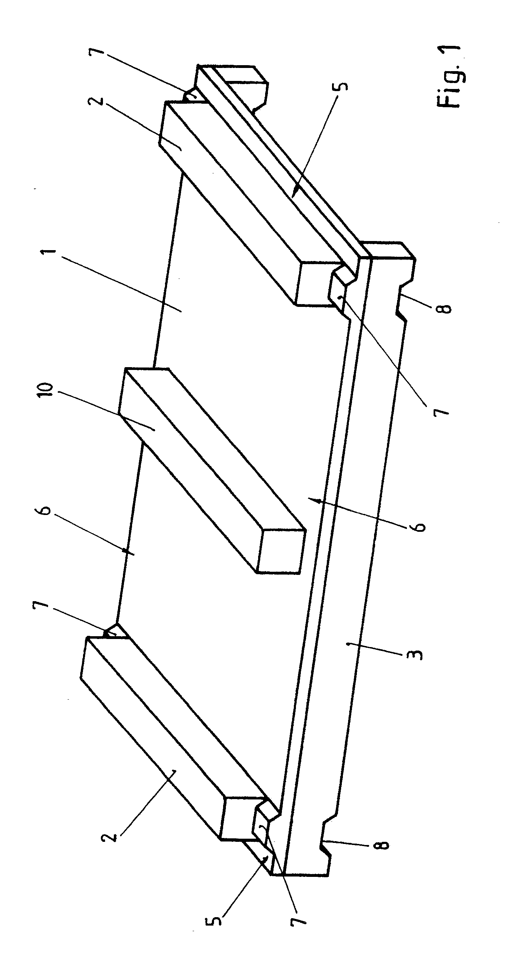

Die in Figur 1 dargestellte Ausführungsform der Palette weist eine ebene Bodenplatte 1 auf, die als Auflager für die zu verarbeitenden Warenstücke, beispielsweise Schokoladeriegel, -tafeln o. dgl. dient. Die Warenstücke werden üblicherweise in Reihe auf der Aufnahmefläche der Bodenplatte 1 abgelegt und zusammen mit der Palette transportiert.

Die Bodenplatte 1 weist rechteckige Gestalt auf und trägt auf ihrer Oberseite Ansätze oder Leisten 2, die an zwei einander gegenüberliegenden Kanten 5 der Bodenplatte 1 angeordnet und parallel zueinander ausgerichtet vorgesehen sind. Die beiden anderen Kanten 6 der Bodenplatte 1 sind ohne Leisten gestaltet und weisen hier gleichsam einen Freiraum auf, der dem insbesondere maschinellen Auf- und Abschieben der Warenstücke auf bzw. von der Aufnahmefläche der Bodenplatte 1 dient. Die zu transportierenden Warenstücke liegen zwischen den Leisten 2 auf der Bodenplatte 1. Sie lassen sich ohne Weiteres in Richtung der Leisten 2 verschieben. Beispielsweise werden Schokoladeriegel in größeren Gruppen von der Seite des Freiraums her auf die Bodenplatten 1 geschoben und in entsprechender Weise beim Entladen der Palette seitlich heruntergeschoben. Die Leisten 2 stellen hierbei kein Hindernis dar. Auch das Reinigen der Palette ist durch die Anordnung der Leisten 2 nicht behindert. Reinigungsbürsten lassen sich in Richtung der Leisten 2 über die Palette hinwegführen. Für die Bürsten unzugängliche Stellen treten dabei nicht auf.

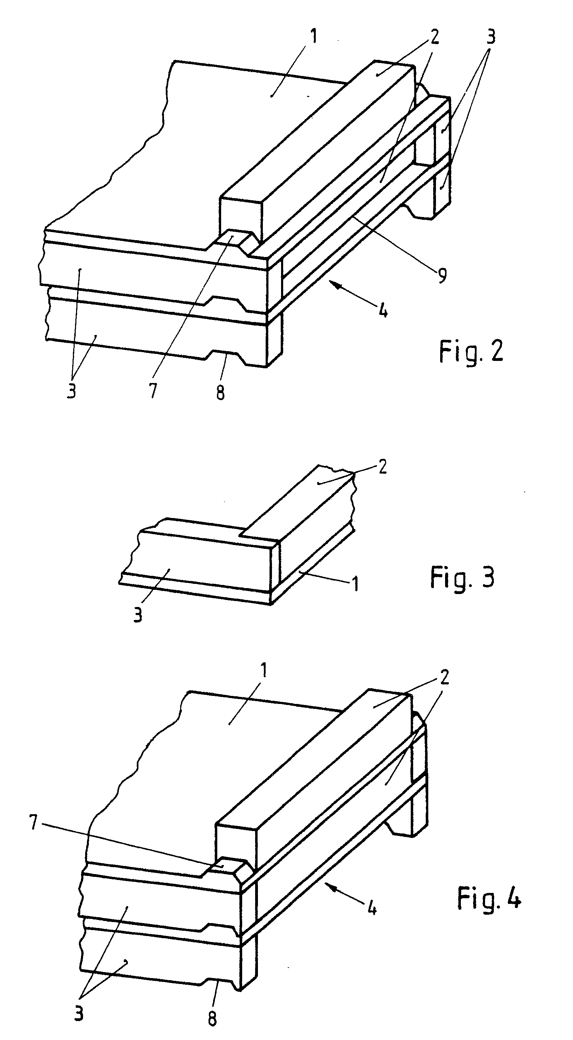

Auf der Unterseite der Bodenplatte 1 sind ebenfalls Ansätze bzw. Leisten 3 vorgesehen. Diese Leisten 3 verlaufen parallel zueinander und sind an den einander gegenüberliegenden Kanten 6 der Platte 1 angeordnet. Wesentlich ist, daß die Leisten 3 in der Ebene der Bodenplatte 1 rechtwinklig zu den Leisten 2 verlaufen. Der Abstand der Leisten 3 voneinander entspricht dabei der Länge der Leisten 2 auf der Oberseite der Bodenplatte 1. Die Leisten 2 und 3 weisen gleiche Höhe auf. Hierdurch lassen sich die Paletten zu einem Stapel 4 übereinanderlegen, wie es etwa in den Figuren 2 bis 4 dargestellt ist. Durch die gleiche Höhe der Leisten 2 und 3 werden zwischen den Bodenplatten 1 übereinandergestapelter Paletten geschlossene Aufnahmeräume gebildet, so daß die Warenstücke innerhalb dieser Aufnahmeräume allseitig geschützt untergebracht sind. Staub oder gar Ungeziefer kann nicht an die noch unverpackten Warenstücke gelangen.

Die einzelnen, in einem Stapel 4 vorhandenen Paletten sind auch verdreh- und verschiebegesichert stapelbar. Hierzu greifen die Leisten 2 auf der Oberseite einer ersten Palette zwischen die Leisten 3 der nächsten, darüberliegenden Palette. Damit auch eine Verschiebung der Paletten gegeneinander in Richtung der Leisten 3 ausgeschlossen ist, sind an den Enden der Leisten 2 auf der Oberseite der Bodenplatten 1 Rasten 7 vorgesehen, welche mit entsprechenden Ausnehmungen 8 auf der Unterseite der Leisten 3 der darüberliegenden Palette zusammenarbeiten. Der Stapel 4 bildet somit einen festen Block, welcher sich als eine Einheit weitertransportieren läßt. Da die Leisten 3 entlang der Kante 6 angeordnet sind, wird hier eine geschlossene Wandung im Stapel erreicht. Der Stapel ist auch unempfindlich gegen Erschütterungen und die zu transportierenden Warenstücke können aus dem Aufnahmeraum nicht herausfallen. Erst nach der Entstapelung sind die Warenstücke wieder zugänglich. Die oberste Palette eines Stapels 4 wird zweckmäßigerweise mit Warenstücken nicht beladen.

Anstelle der Vertiefungen 7, 8 an den Paletten kann die Leiste 3 auch eine seitliche Ausnehmung aufweisen, welche in die entsprechende Leiste 2 einer benachbarten Palette hineingreift. Eine solche Ausführungsform ist schematisch in Figur 3 dargestellt.

Die Leisten 2 und 3 können direkt an den Kanten 5 bzw. 6, also angrenzend an die Ränder der Bodenplatte 1, angeordnet sein, wie es in Figur 4 dargestellt ist. Vorzugsweise sind die Leisten 2 jedoch geringfügig nach innen versetzt (Figur 1), so daß auf der Außenseite des Stapels vier Hinterschneidungen 9 entstehen (Figur 2), die insbesondere beim maschinellen Stapeln der Paletten übereinander hilfreich sind. Es können hier Werkzeuge hineingreifen, welche die einzelnen Paletten erfassen. Andererseits ist es aber auch möglich, die Paletten mit der Hand abzuheben.

Die Leisten 3 auf der Unterseite der Bodenplatte 1 sind als Gleitkufen ausgebildet und lassen sich daher in einfacher Weise in Schienen führen. Die aus den Paletten gebildeten Stapel 4 können auch leicht auf solchen Schienen transportiert werden, die direkt in ein automatisches Lager geführt sein können. Die Handhabung und der Transport der Stapel 4 kann vollautomatisch erfolgen, ohne daß dabei Rollcontainer erforderlich sind.

Auf der Oberseite der Bodenplatte 1 können ein oder mehrere Trennrippen 10 vorgesehen sein, welche parallel zu den Leisten 2 ausgerichtet sind. Diese Trennrippen 10 dienen einmal dazu, die Bodenplatte 1 weiter zu verstärken und dienen gleichzeitig als Trennung und Führung für je eine Reihe von Warenstücken zwischen einer Trennrippe 10 und einer Leiste 2.

## Ansprüche

1. Palette zum Speichern und zum Transport von Warenstücken mit einer eine Aufnahmefläche für die Warenstücke aufweisenden Bodenplatte (1), die auf ihrer Unterseite im Randbereich parallel zueinander verlaufende Leisten (3) aufweist, die in auf der Oberseite einer benachbarten Palette angeordnete Vertiefungen eingreifen, so daß mehrere gleichartige Paletten zu einer verdreh- und verschiebegesicherten Einheit aufstapelbar und so handhabbar sind, dadurch gekennzeichnet, daß auch auf der Oberseite der Bodenplatte (1) im Randbereich zwei parallel zueinander verlaufende Leisten (2) vorgesehen sind, die jedoch rechtwinklig zu den Leisten (3) auf der Unterseite der Bodenplatte (1) angeordnet sind, daß die der verdreh- und verschiebegesicherten Stapelbarkeit dienenden Vertiefungen (7, 8) an den oberen und unteren Leisten (2, 3) vorgesehen sind, und daß die oberen und unteren Leisten (2, 3) gleiche Höhe aufweisen und so in gestapeltem Zustand zusammen mit der Bodenplatte einen allseitig geschlossenen Aufnahmeraum für Süßwarenstücke bilden.

**2.** Palette nach Anspruch 1, dadurch gekennzeichnet, daß die oberen und unteren Leisten (2, 3) ungefähr an Kanten (5, 6) der Bodenplatte (1) vorgesehen sind.

**3.** Palette nach Anspruch 1 und 2, dadurch gekennzeichnet, daß die Bodenplatte (1) auf ihrer Oberseite im Anschluß an die Leisten (2) Rasten (7) und die darunter angeordneten Leisten (3) an ihrer Unterseite entsprechende Ausnehmungen (8) aufweisen, wobie die Rasten (7) und Ausnehmungen (8) die Vertiefungen bilden.

**4.** Palette nach Anspruch 1 bis 3, dadurch gekennzeichnet, daß die Leisten (3) an der Unterseite der Bodenplatte (1) als Gleitkufen ausgebildet sind.

**5.** Palette nach Anspruch 1 bis 4, dadurch gekennzeichnet, daß die Leisten (2, 3) mindestens auf einer Seite der Bodenplatte (1) gegenüber den Kanten (5, 6) zurückversetzt und dadurch im Stapel (4) seitliche Hinterschneidungen (9) zum Eingreifen gebildet sind.

**6.** Palette nach Anspruch 1 bis 5, dadurch gekennzeichnet, daß auf der Oberseite der Bodenplatte (1) eine Trennrippe (10) angeordnet ist.

## Claims

**1.** Pallet, for the storage and for the transport of goods, with a base plate (1), which displays a receiving surface for the goods and on its underside displays strips (3), which extend one parallelly to the other and engage into depression arranged on the upper side of a neighbouring pallet so that several pallets of like kind are stackable into a unit, which is secured against rotation and displacement and manipulable as such, characterised thereby, that two strips (2) are also provided in the rim region on the upper side of the base plate (1), which are however arranged at right angles to the strips (3) on the underside of the base plate (1), that the depressions (7, 8), which serve the capability of stacking secured against rotation and displacement, are provided at the upper and the lower strips (2, 3) and that the upper and the lower strips (2, 3) display the same height and thus in the stacked state together with the base plate form a receiving space, which is closed all round, for sweets.

**2.** Pallet according to claim 1, characterised thereby, that the upper and the lower strips (2, 3) are provided approximately at edges (5, 6) of the base plate (1).

**3.** Pallet according to claim 1 and 2, characterised thereby, that the base plate (1) displays detents (7) on its upper side and adjoining the strips (2) and the strips (3) arranged thereunder display corresponding recesses (8) at their underside, wherein the detents (7) and the recesses (8) form the depressions.

**4.** Pallet according to claim 1 to 3, characterised thereby, that the strips (3) on the underside of the base plate (1) are constructed as skids.

**5.** Pallet according to claim 1 to 4, characterised thereby, that the strips (2, 3) are set back relative to the edges (5, 6) on at least one side of the base plate (1) and lateral undercuts (9) are thereby formed in the stack (9) for engagement.

**6.** Pallet according to claim 1 to 5, characterised thereby, that a partition rib (10) is arranged on the upper side of the base plate (1).

## Revendications

**1.** Palette destinée au stockage et au transport d'articles, comportant une plaque de base (1) présentant une surface de réception destinée aux articles, qui comporte sur sa face inférieure, dans la zone marginale, des nervures (3) s'étendant parallèlement entre elles, et pénétrant dans des creux disposés sur la face supérieure d'une palette voisine, de façon telle que plusieurs palettes semblables peuvent être empilées pour former une unité exempte de déplacements en rotation et en translation, et sont ainsi susceptibles d'être manipulées, caractérisée par le fait que l'on prévoit également, sur la face supérieure de la plaque de base (1) dans la zone marginale, deux nervures (2) qui s'étendent parallèlement entre elles, mais qui sont cependant disposées à angle droit par rapport aux nervures (3) existant sur la face inférieure de la plaque de base (1), que l'on prévoit, sur les nervures supérieures et inférieures (2, 3), des creux (7, 8) servant à assurer la possibilité d'effectuer des empilages exempts de déplacements en rotation et en translation, et que les nervures supérieures et inférieures (2, 3) présentent des hauteurs égales et forment ainsi à l'état empilé, avec la plaque de base, un espace de réception fermé de tous côtés, pour des articles de confiserie.

2. Palette selon la revendication 1, caractérisée par le fait que les nervures supérieures et inférieures (2, 3) sont prévues approximativement contre les arêtes (5, 6) des bords de la plaque de base (1).

3. Palette selon la revendication 1 ou 2, caractérisée par le fait que la plaque de base (1) présente sur sa face supérieure des saillies d'arrêt (7) raccordées aux nervures (2), et que les nervures (3) situées sur sa face inférieure présentent des évidements correspondants (8), les saillies d'arrêt (7) et les évidements (8) formant les creux.

4. Palette selon les revendications 1 à 3, caractérisée par le fait que les nervures (3) situées sur la face inférieure de la plaque de base (1) sont conformées en patins.

5. Palette selon les revendications 1 à 4, caractérisée par le fait que les nervures (2, 3) sont décalées en retrait, au moins d'un côté de la plaque de base (1), par rapport aux arêtes (5, 6) de bord et que de ce fait se trouvent formées dans la pile (4) des parties (9) en retrait par dessous, situées sur le côté, en vue de la saisie.

6. Palette selon les revendications 1 à 5, caractérisée par le fait qu'une nervure de séparation (10) est disposée sur le côté supérieur de la plaque de base (1).

Fig. 1

Fig. 2

Fig. 3

Fig. 4